# EUROPÄISCHE PATENTSCHRIFT

(11) **EP 1 182 434 B1**
(45) Veröffentlichungstag und Bekanntmachung des Hinweises auf die Patenterteilung: **26.12.2007**
(21) Anmeldenummer: 01119381.0
(22) Anmeldetag: 11.08.2001
(51) Int. Cl.: G01F 23/284

(54) **Multi-Frequenz-Füllstandmessradargerät**
Multi-frequency radar level measurement device
Jauge radar de niveau multifréquence

(30) Priorität: 17.08.2000 DE 10040131
(43) Veröffentlichungstag der Anmeldung: 27.02.2002
(73) Patentinhaber: VEGA Grieshaber KG, 77709 Wolfach (DE)
(72) Erfinder: Schultheiss, Daniel, 78132 Hornberg (DE)
(74) Vertreter: Patentanwälte Westphal, Mussgnug & Partner

(56) Entgegenhaltungen:
- US-A- 5 420 591
- US-A- 5 629 706

## Beschreibung

Die vorliegende Erfindung betrifft eine Füllstandsmeßvorrichtung, die zur Erfassung des Füllstandes eines Gutes in einem Behälter ein Signal abstrahlt und ein empfangenes Echo des Signals auswertet.

Sogenannte Füllstandmessradars, die nach dem oben angegebenen Prinzip arbeiten, sind bekannt. Derzeitige Füllstandmessradars strahlen ein gepulstes Funksignal mit einer festgelegten Mittenfrequenz f_{M} und einer Bandbreite B aus. Die Sende- und Empfangsantennen dieser Füllstandsmeßradars sind auf diesen Frequenzbereich abgestimmt.

Diese Füllstandsmeßradars werden zum Überwachen von Füllständen einer Vielzahl von Gütern in Behältern aus unterschiedlichen Materialien eingesetzt. Das empfangene Echosignal setzt sich aus Beiträgen des zu überwachenden Füllspiegels, der Wände des Behälters und eventuell noch weiterer Störquellen zusammen, wobei das Verhältnis der Intensitäten der einzelnen Echobeiträge je nach Art des zu überwachenden Guts, dem Material der Behälterwand und der Arbeitsfrequenz des Radars stark variieren können. Die Meßgenauigkeit eines solchen Füllstandsmeßradars kann daher je nach Anwendungsumgebung stark variieren.

Ein solcher Zustand ist weder für die Anwender solcher Füllstandsmeßradars wünschenswert, die an einer sicheren Erfassung interessiert sind, noch für die Hersteller solcher Systeme, von denen Spezifikationen über die Meßgenauigkeit solcher Systeme verlangt werden, und die bei einer zu optimistischen Einschätzung der Meßgenauigkeit Gefahr laufen, haftbar gemacht zu werden, oder bei einer zu konservativen Einschätzung damit rechnen müssen, daß ein potentieller Anwender einem anderen Meßsystem den Vorzug gibt. Es besteht daher erheblicher Bedarf nach einer Füllstandsmeßvorrichtung mit einem Sender, einem Empfänger für ein Echo eines vom Sender abgestrahlten Signals und einer Auswertungsschaltung zum Abschätzen eines Füllstandes anhand von Laufzeiten unterschiedlicher Beiträge des Echos, die Meßergebnisse von im wesentlichen gleichbleibender Genauigkeit für eine Vielzahl von Anwendungsumgebungen, genauer gesagt von Kombinationen von zu überwachenden Gütern, Behältermaterialien etc., liefern kann.

Vorrichtungen zur Füllstands- bzw. Abstandsmessung bei mehreren verschiedenen Frequenzen sind aus den Dokumenten US-A-5 629 706 bzw. US-A-5 420 591 bekannt. Im Unterschied zu diesen Vorrichtungen wird das Problem erfindungsgemäß gelöst durch eine Füllstandsmeßvorrichtung der oben angegebenen Art, bei der der Sender und der Empfänger zum Betrieb bei einer Mehrzahl von Frequenzen des abgestrahlten Signals und des Echos geeignet sind, der Sender ist zum Senden auf einer Mehrzahl von Frequenzen gleichzeitig geeignet, und der Empfänger umfaßt eine Mehrzahl von Empfängermodulen, die jeweils für den Empfang bei einer der mehreren Frequenzen geeignet sind. Mit einer solchen Füllstandsmeßvorrichtung kann eine Mehrzahl von Echosignalen bei den verschiedenen Frequenzen jeweils bezogen auf einen gleichen Meßzeitpunkt gewonnen werden, und die Echosignale werden jeweils zeitgleich von den Empfängermodulen ausgegeben, was die Verarbeitung durch die Auswertungsschaltung im Vergleich zu einer sukzessiven Erzeugung der Echosignale erleichtert, wobei die Auswerteschaltung derart ausgebildet ist, dass sie ein Produkt von Intensität der Echos der mehreren Frequenzen bildet.

Eine weitere Verbesserung der Meßgenauigkeit läßt sich erreichen durch eine Verknüpfung der bei den verschiedenen Frequenzen erhaltenen Echosignale. Um Störbeiträge auszufiltern, kann zweckmäßigerweise vorgesehen werden, daß die Auswertungsschaltung nur solche Beiträge berücksichtigt, die in wenigstens zwei Echosignalen unterschiedlicher Frequenz bzw., strenger noch, in allen Echosignalen, auftreten.

Weitere Merkmale und Vorteile der erfindungsgemäßen Füllstandsmeßvorrichtung ergeben sich aus der nachfolgenden Beschreibung von Ausführungsbeispielen mit Bezug auf die Figuren.

Es zeigen:
Figur 1 ein Blockdiagramm einer Füllstandsmeßvorrichtung;
Figuren 2a und 2b Beispiele von bei verschiedenen Frequenzen gemessenen Echos; und
Figur 3 ein Blockdiagramm einer erfindungsgemäßen Füllstandsmeßvorrichtung.

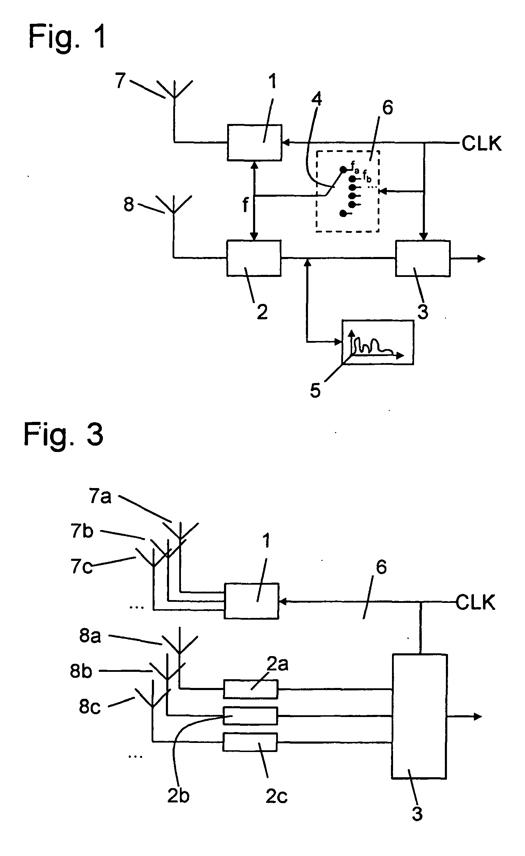

Figur 1 zeigt eine erste Ausgestaltung eines Füllstandsmeßradars als Beispiel für eine Füllstandsmeßvorrichtung anhand eines stark schematisierten Blockdiagramms. Die Füllstandsmessvorrichtung umfaßt einen Hochfrequenzsender 1, der, angesteuert durch ein Taktsignal CLK, Hochfrequenzimpulse einer wählbaren Frequenz abstrahlt. Die Frequenz der abgestrahlten Impulse ist durch ein an einem Frequenzsteuereingang des Senders 1 anliegendes Signal f vorgegeben. Der Sender kann z.B. aus einer Mehrzahl von an sich bekannten Sendermodulen für eine feste Frequenz aufgebaut sein, von denen jeweils eines durch das Signal f aktiviert wird. Alternativ kann das Signal f auch ein Lokaloszillatorsignal sein, das eine Referenzschwingung mit der Arbeitsfrequenz des Senders liefert.

Komplementär dazu ist ein Empfänger 2 vorhanden, der Echos des vom Sender 1 abgestrahlten Hochfrequenzsignals aus einem zu überwachenden Volumen empfängt und der auf eine Mehrzahl von Empfangsfrequenzen jeweils entsprechend den vom Sender verwendeten Sendefrequenzen durch das gleiche Frequenzsteuersignal f einstellbar ist. Auch der Empfänger 2 kann aus einer Mehrzahl von Empfängermodulen für jeweils eine feste Frequenz aufgebaut sein. Den Sender- bzw. Empfängermodulen kann jeweils eine gemeinsame Sende- bzw. Empfangsantenne 7 bzw. 8 zugeordnet sein, was insbesondere dann zweckmäßig ist, wenn die einzelnen Frequenzen eng benachbart sind oder in einem harmonischen Verhältnis zu einander stehen, so daß eine Antenne von gegebenen festen Abmessungen zum Empfang mehrerer Frequenzen geeignet ist; es können den Modulen jedoch auch jeweils eigene Antennen zugeordnet sein. Da die Echosignale jeweils zeitversetzt zu den vom Sender abgestrahlten gepulsten Signalen empfangen werden, kann auch eine Antenne für eine oder mehrere Frequenzen als Sende- und Empfangsantenne gleichzeitig dienen.

Der Empfänger 2 liefert ein den zeitlichen Verlauf der Intensität des Echos darstellendes elektrisches Signal an eine Auswertungsschaltung 3, die aus den verschiedenen Beiträgen des Echos, das heißt aus verschiedenen Maxima der Echointensität bei jeweils unterschiedlichen Signallaufzeiten, den Beitrag des zu überwachenden Spiegels eines Gutes in dem Behälter identifiziert, an dem die Messvorrichtung angebracht ist, und anhand dieses Beitrags einen Füllstand berechnet und ausgibt. Diese Auswertungsschaltung 3 kann nach einem beliebigen, an sich bekannten Verfahren arbeiten, das nicht Bestandteil der vorliegenden Erfindung ist und deshalb nicht im Detail beschrieben wird.

In einer ersten, einfachen Ausgestaltung der Füllstandsmeßvorrichtung ist ein von einer Bedienungsperson betätigbarer Wählschalter 4 vorgesehen, über den die Bedienungsperson in der Lage ist, das Signal f zu bestimmen und damit die Sende- und Empfangsfrequenz der Vorrichtung unter einer Mehrzahl vorgegebener Frequenzen fₐ, f_{b}, ... zu wählen. Dieser Wählschalter 4 wird zweckmäßigerweise von einem Servicetechniker bei der Installation der Füllstandsmeßvorrichtung in einer Anwendungsumgebung eingesetzt, um Probe-Echosignale des zu überwachenden Behälters und des darin befindlichen Gutes bei den diversen Frequenzen fₐ, f_{b}, ... zu erzeugen, die der Sender 1 zu liefern vermag, und die Qualität der Echosignale vergleichend zu beurteilen. Dies kann z.B. mit Hilfe eines zeitweilig an den Ausgang des Empfängers 2 angeschlossenen Oszilloskops 5 erfolgen.

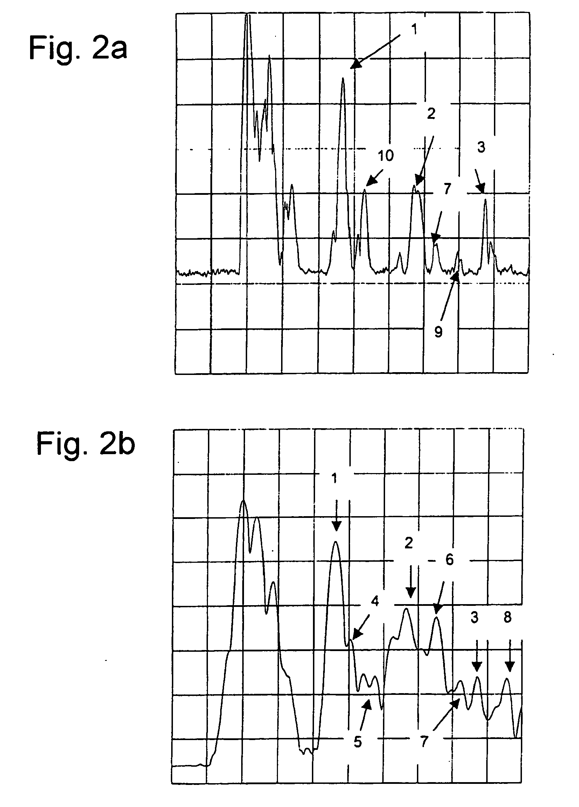

Zwei Beispiele von mit einer solchen Anordnung bei verschiedenen Frequenzen erhältlichen Echosignalen sind in Figur 2a bzw. 2b gezeigt. In diesen Figuren ist die Ordinate jeweils eine Zeitachse und die Abszisse stellt die Intensität des empfangenen Echosignals dar. Der Vergleich von Figur 2a und 2b zeigt, daß die Frequenz von Figur 2a offensichtlich schärfere Echosignale liefert als die von Figur 2b. Zum Beispiel ist in Figur 2a ein mit 10 bezeichneter Peak deutlich von einem mit 1 bezeichneten starken Peak getrennt zu erkennen, wohingegen er bei der Frequenz von Figur 2b mit benachbarten Peaks verschmilzt und nicht mehr sicher auszumachen ist. Die Frequenz von Figur 2a ist daher voraussichtlich die zur Füllstandsüberwachung besser geeignete.

Wenn der Servicetechniker die Beurteilung der Echos bei den verschiedenen Frequenzen vorgenommen und die bestgeeignete Frequenz ausgewählt hat, stellt er diese zur weiteren Verwendung durch die Meßvorrichtung am Wählschalter 4 fest ein; eine spätere Änderung durch den Anwender ist nicht vorgesehen. Der Wählschalter 4 kann daher zweckmäßigerweise im Inneren eines Gehäuses und bei geschlossenem Gehäuse von außen unzugänglich angeordnet sein, er kann auch durch eine von dem Servicetechniker anzubringende feste Verdrahtung oder durch Jumper implementiert werden.

Bei einer weiterentwickelten Ausgestaltung der Füllstandsmeßvorrichtung ist der Wählschalter 4 durch eine in Figur 1 als gestrichelter Umriß gezeichnete Wählschaltung 6 ersetzt, die, gesteuert durch das Taktsignal CLK, das Signal f variiert und so den Sender 1 und den Empfänger 2 zyklisch auf wechselnde Frequenzen fₐ, f_{b}, ... einstellt. Auf diese Weise erhält die Auswertungsschaltung 3 periodisch Echosignale aller Arbeitsfrequenzen fₐ, f_{b}, ..., über die Sender und Empfänger verfügen, um aus diesen den Füllstand zu berechnen. Als Meßwert des Füllstandes liefert die Auswertungsschaltung 3 zweckmäßigerweise einen Mittelwert der für die verschiedenen Frequenzen erhaltenen Meßwerte. Die Mittelwertbildung kann vorzugsweise unter Berücksichtigung der Zuverlässigkeit der bei den verschiedenen Frequenzen erhaltenen Meßwerte gewichtet erfolgen.

Figur 3 zeigt eine Ausgestaltung der erfindungsgemäßen Füllstandsmeßvorrichtung, bei der der Sender 1 jeweils Hochfrequenzpulse mit einer Mehrzahl verschiedener Frequenzen fₐ, f_{b}, ... gleichzeitig ausstrahlt, in der Figur angedeutet durch mehrere Sendeantennen 7a, 7b, 7c. Der Empfänger 2 umfaßt eine Mehrzahl von Empfängermodulen 2a, 2b, 2c ..., die jeweils auf eine der vom Sender 1 abgestrahlten Frequenzen abgestimmt sind und die hier jeweils mit einer eigenen Empfangsantenne 8a, 8b, 8c dargestellt sind. Wie im Falle der Ausgestaltung aus Figur 1 können mehrere Sendermodule bzw. mehrere Empfängermodule jeweils eine gleiche Sende- bzw. Empfangsantenne verwenden, wenn die Frequenzen dieser Sender/Empfängermodule dies zulassen. Auch können ein Sender- und ein Empfängermodul mit gleicher Frequenz eine gemeinsame Antenne zum Senden und Empfangen nutzen. Die Empfängermodule 2a, 2b, ... liefern jeweils synchron zueinander die Echosignale der verschiedenen Frequenzen an die Auswertungsschaltung 3. Durch einen Vergleich der verschiedenen Echosignale ist die Auswertungsschaltung 3 in der Lage, das Meßergebnis gegenüber der isolierten Auswertung eines einzelnen Echosignals zu verbessern. Genauer gesagt bildet die Auswertungsschaltung ein Produkt der Form I(t) = Iₐ(t) x I_{b}(t) wobei Iₐ(t), I_{b}(t), ... jeweils die Intensitäten der von den Empfängermodulen 2a, 2b, ... empfangenen Echosignale als Funktion der Zeit t bezeichnen. Aus der Betrachtung der Figuren 2a, 2b erkennt man leicht, daß ein solches Produkt für solche Laufzeiten t große Werte aufweisen wird, bei denen sämtliche Echosignale Beiträge aufweisen, wohingegen Beiträge, die nur in einzelnen Echosignalen vorhanden sind und die mit großer Wahrscheinlichkeit auf Störeinflüsse zurückgehen, in dem Produkt verschwinden. So wären z.B. in einem Produkt der Echosignale der Figuren 2a und 2b die Peaks 1, 2, 3 und 7 deutlich zu erkennen, die Peaks 4, 5, 6, 8, 9 und 10 jedoch nicht. Auf diese Weise kann die Zahl der auszuwertenden Echos auf einfache und schnelle Art im Falle des Beispiels der Figuren 2a, 2b von 10 auf 4 reduziert werden. Das so erhaltene Produkt kann in an sich bekannter Weise, genauso wie ein Ausgangssignal des Empfängers 2 aus Figur 1, ausgewertet werden.

In vielen Anwendungssituationen rührt das stärkste Echo nicht von dem Spiegel des zu überwachenden Gutes sondern von einer ortsfesten Oberfläche in der Umgebung der Meßvorrichtung her. Um zu verhindern, daß in einem solchen Fall das dem Spiegel entsprechende Produkt gegenüber dem der festen Oberfläche entsprechenden Echo insignifikant klein wird, ist es zweckmäßig, die Zahl der gleichzeitig zu berücksichtigenden Frequenzen auf nicht mehr als beispielsweise vier zu begrenzen.

Eine andere Möglichkeit, eine vergleichende Auswertung der Echosignale durchzuführen, ist, die Lage der Peaks in den einzelnen Echosignalen zu erfassen und jeweils solche Peaks verschiedener Echosignale einander zuzuordnen, deren Laufzeitdifferenz einen vorgegebenen Grenzwert nicht überschreitet, und abermals lediglich diejenigen Peaks auszuwerten, die in allen Echosignalen oder zumindest in einem großen Teil von ihnen vorkommen.

Eine solche Art der Auswertung ist auch bei der zweiten mit Bezug auf Figur 1 beschriebenen Ausgestaltung der Füllstandsmeßvorrichtung möglich, wenn die Auswertungsschaltung 3 zusätzlich mit Pufferspeichern zum Zwischenspeichern von bei verschiedenen Frequenzen fₐ, f_{b}, ... aufgenommenen Echosignalen oder zumindest der Lage der Peaks dieser Echosignale ausgestattet ist.

Die oben anhand eines Füllstandsmeßradars beschriebene Erfindung ist ohne weiteres auch auf Meßvorrichtungen übertragbar, die andere Arten von Signalen wie etwa optische oder akustische Signale ausstrahlen und deren Echos auswerten.

## Patentansprüche

1. Füllstandsmessvorrichtung mit einem Sender (1), einem Empfänger (2) für ein Echo eines vom Sender (1) abgestrahlten Signals und einer Auswertungsschaltung (3) zum Messen eines Füllstandes anhand von Laufzeiten unterschiedlicher Beiträge des Echos, wobei der Sender (1) und der Empfänger (2) zum Betrieb bei einer Mehrzahl von Frequenzen (fₐ, f_{b}, ...) des abgestrahlten Signals und des Echos geeignet sind,
**dadurch gekennzeichnet, dass**
der Sender (1) zum gleichzeitigen Senden auf mehreren Frequenzen (fₐ, f_{b}, ...) eingerichtet ist, und dass der Empfänger (2) jeweils eine Mehrzahl von Empfängermodulen (2a, 2b, ...) aufweist, die für den Empfang jeweils einer der mehreren Frequenzen eingerichtet sind, wobei die Auswerteschaltung (3) derart ausgebildet ist, dass sie ein Produkt von Intensitäten der Echos der mehreren Frequenzen (fₐ, f_{b}, ...) bildet.

2. Füllstandsmessvorrichtung nach Anspruch 1,
**dadurch gekennzeichnet, dass**
die Auswertungsschaltung (3) für die Abschätzung des Füllstandes solche Beiträge des Echos berücksichtigt, die bei wenigstens zwei Frequenzen auftreten.

3. Füllstandsmessvorrichtung nach Anspruch 2,
**dadurch gekennzeichnet, dass**
die Auswertungsschaltung (3) für die Abschätzung des Füllstandes solche Beiträge des Echos berücksichtigt, die bei allen empfangenen Frequenzen auftreten.

4. Füllstandsmessvorrichtung nach einem der vorhergehenden Ansprüche,
**dadurch gekennzeichnet, dass**
das Signal ein Hochfrequenz-Funksignal ist.

## Claims

1. A level meter having a transmitter (1), a receiver (2) for an echo of a signal emitted by the transmitter (1) and an evaluation circuit (3) for measuring a level on the basis of transit times of different contributions of the echo, the transmitter (1) and the receiver(2) being suitable for operation with a plurality of frequencies (fₐ, f_{b}, ...) of the emitted signal and of the echo,
**characterised in that** the transmitter (1) is set up for simultaneous transmission on several frequencies (fₐ, f_{b}, ...),
and **in that** the receiver (2) in each case comprises a plurality of receiver modules (2a, 2b, ...), each of which is set up to receive one of the several frequencies, the evaluation circuit (3) being designed in such a manner that it forms a product of intensities of the echoes of the several frequencies (fₐ, f_{b}, ...).

2. A level meter according to Claim 1,
**characterised in that** for the appraisal of the level the evaluation circuit (3) takes into consideration those contributions of the echo that occur for at least two frequencies.

3. A level meter according to Claim 2,
**characterised in that** for the appraisal of the level the evaluation circuit (3) takes into consideration those contributions of the echo that occur for all received frequencies.

4. A level meter according to one of the preceding Claims,
**characterised in that** the signal is a high-frequency radio signal.

## Revendications

1. Dispositif de mesure du niveau de remplissage comprenant un émetteur (1), un récepteur (2) pour un écho d'un signal diffusé par l'émetteur (1), et un circuit d'exploitation (3) pour mesurer un niveau de remplissage à l'aide de durées de différentes composantes de l'écho, l'émetteur (1) et le récepteur (2) étant adaptés pour fonctionner avec une pluralité de fréquences (fₐ, f_{b},...) du signal diffusé et de l'écho,
**caractérisé en ce que**
l'émetteur (1) est conçu pour émettre simultanément sur plusieurs fréquences (fₐ, f_{b},...), et le récepteur (2) présente respectivement une pluralité de modules de réception (2a, 2b,...) conçus pour recevoir respectivement l'une des nombreuses fréquences, le circuit d'exploitation (3) étant conçu de telle sorte qu'il forme un produit des intensités des échos des nombreuses fréquences (fₐ, f_{b},...).

2. Dispositif de mesure du niveau de remplissage selon la revendication 1,
**caractérisé en ce que**
le circuit d'exploitation (3), pour l'estimation du niveau de remplissage, prend en compte les composantes de l'écho qui apparaissent à au moins deux fréquences.

3. Dispositif de mesure du niveau de remplissage selon la revendication 2,
**caractérisé en ce que**
le circuit d'exploitation (3), pour l'estimation du niveau de remplissage, prend en compte les composantes de l'écho qui apparaissent à toutes les fréquences reçues.

4. Dispositif de mesure du niveau de remplissage selon l'une des revendications précédentes,
**caractérisé en ce que**
le signal est un signal radio haute fréquence.
